# EUROPEAN PATENT SPECIFICATION

(11) **EP 3 437 454 B1**
(45) Date of publication and mention of the grant of the patent: **01.01.2020**
(21) Application number: 18185715.2
(22) Date of filing: 26.07.2018
(51) Int. Cl.: A01D 34/82, A01D 75/28, A01D 34/00, A01D 75/20

(54) **LAWNMOWER WITH TILT SENSOR TO INHIBIT THE STARTING**
RASENMÄHER MIT EINEM NEIGUNGSSENSOR, UM DAS ANLASSEN ZU VERHINDERN
TONDEUSE À GAZON AVEC UN CAPTEUR D'INCLINAISON POUR EMPÊCHER LE DÉMARRAGE

(30) Priority: 31.07.2017 IT 201700087949
(43) Date of publication of application: 06.02.2019
(73) Proprietor: Stiga S.p.A. in breve anche St. S.p.A., 31033 Castelfranco Veneto (TV) (IT)
(72) Inventor: VILLANOVA, Marco, 31020 Sernaglia della Battaglia (TV) (IT)
(74) Representative: Mittler, Andrea

(56) References cited:
- EP-A1- 1 080 626
- WO-A1-2012/175901
- WO-A1-2013/158397
- DE-A1- 4 022 699
- US-A1- 2003 144 774
- US-B2- 6 983 583

## Description

The present invention relates to a lawnmower with tilt sensor to inhibit the starting.

Control apparatuses are known which automatically interrupt the operation of a lawnmower for safety reasons.

EP-1080626 describes a lawnmower in which a tilt sensor interrupts the electrical power to the engine if the lawnmower tilts beyond a certain angle with respect to a horizontal plane, for example, due to unevenness. A possible overturning would not, for example, cause the interaction of the cutting blades in motion with the user.

US-6983583 describes a lawnmower with a system for deactivating the rotation of the cutting blades by a tilt sensor with respect to a horizontal plane.

US-8196936 describes a lawnmower with a tilt sensor mounted on the suspensions of the lawnmower, able to interrupt the operation of the started lawnmower.

US-8165759 describes a lawnmower with a tilt sensor mounted on the frame, able to interrupt the operation of the started lawnmower.

US-2003/0144774 describes a tilt sensor for a lawnmower, in which the lawnmower only starts if the tilt sensor satisfies a test run.

Disadvantageously, said patents do not describe systems which inhibit the starting of the lawnmower in the parking configuration, but only the switching-off thereof once started.

For safety reasons, parking the lawnmower is required, thus preventing an accidental action from starting it.

It is the object of the present invention to provide a lawnmower equipped with a device which inhibits the starting of the lawnmower in the parking configuration.

It is a further object of the present invention that said tilt sensor is in an easily accessible position, protected and easily associable with a lawnmower already on the market.

Said objects are achieved by a lawnmower as described in claim 1.

Advantageously, the inhibition of the starting prevents any movement of dangerous parts of the lawnmower.

Further advantages are achieved by mounting the tilt sensor on the handle of the lawnmower, thus inhibiting the starting even when the frame is horizontal or slightly inclined (for example, in the presence of an inclined hilly plane): thus, the lawnmower 1 does not risk running over a user if accidentally started.

Advantageously, the vertical frame parking configuration is detected only by virtue of the position of the handle with respect to the frame, without further sensors being mounted inside the frame itself, in the vicinity of mechanical parts subject to wear and overheating.

These and other features of the present invention will become more apparent from the following detailed description of a practical embodiment thereof, shown for non-limiting purposes, in the accompanying drawings, in which:
Figure 1 shows a side view of a lawnmower with handle in the intermediate position, in which the starting is allowed;
Figure 2 shows a side view of a lawnmower with handle in the high position, in which the starting is allowed;
Figure 3 shows a side view of a lawnmower with handle in the low position, in which the starting is allowed;
Figure 4 shows a side view of a lawnmower with handle in the intermediate position and inclined cutting plane, in which the starting is allowed;
Figure 5 shows a side view of a lawnmower with handle in the lowered position and horizontal cutting plane, in which the starting is not allowed;
Figure 6 shows a side view of a lawnmower with handle in the lowered position and vertical cutting plane, in which the starting is not allowed;
Figure 7 shows a diagram of a starting circuit and of a switch-off circuit of a known lawnmower, with a tilt sensor associated with the switch-off circuit, with the lawnmower in motion;
Figure 8 shows a diagram of the circuits of the lawnmower of Figure 7, in which the switching-off by the tilt sensor has been requested;
Figure 9 shows a diagram of a starting circuit and of a switch-off circuit of a lawnmower according to the present invention, in which the starting is allowed;
Figure 10 shows the diagram of the starting circuit and of the switch-off circuit of the lawnmower of Figure 9, in which the starting is not allowed;
Figure 11 shows a tilt sensor of the magnetic type;
Figure 12 shows a tilt sensor of the mechanical type.

A lawnmower 1 comprises a frame 2 within which an engine and a rotating cutting blade are included, and a handle 3 rotatably associated with said frame 2 at a pin 4.

On said handle 3, towards a grip 5, a tilt sensor 6 is mounted. In the vicinity of the grip 5 there are also starting means 7.

The figures show a horizontal axis O, a vertical axis V, a handle axis M, a sensor axis S and an axis P of the cutting plane.

The handle axis M extends substantially along the entire length of the handle 3 up to the frame 2, and with the horizontal axis O it identifies a handle inclination angle α.

The sensor axis S identifies with the vertical axis V an angle η.

The tilt sensor 6 allows the starting of the lawnmower 1 if said angle η is comprised between two threshold values ηₛ which are symmetrical with respect to said axis V, for example between -30° and +30°.

The sensor axis S rotates integral with the axis M with which it therefore forms a constant angle β dependent on the mounting of the tilt sensor 6. For example, it is 58°.

The starting is allowed if the absolute value of said angle η is smaller than the absolute value of the threshold value ηₛ.

Vice versa, the starting is not allowed.

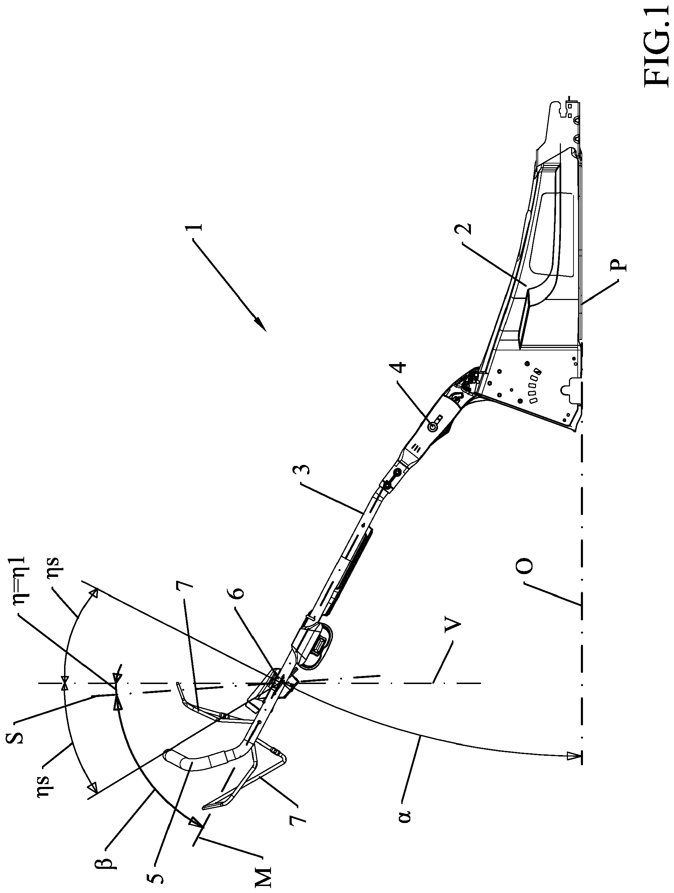

Figure 1 shows the lawnmower 1 with the handle 3 in the intermediate position, in which the absolute value η₁ of the angle η is smaller than the absolute value of the threshold value ηₛ: the starting is allowed.

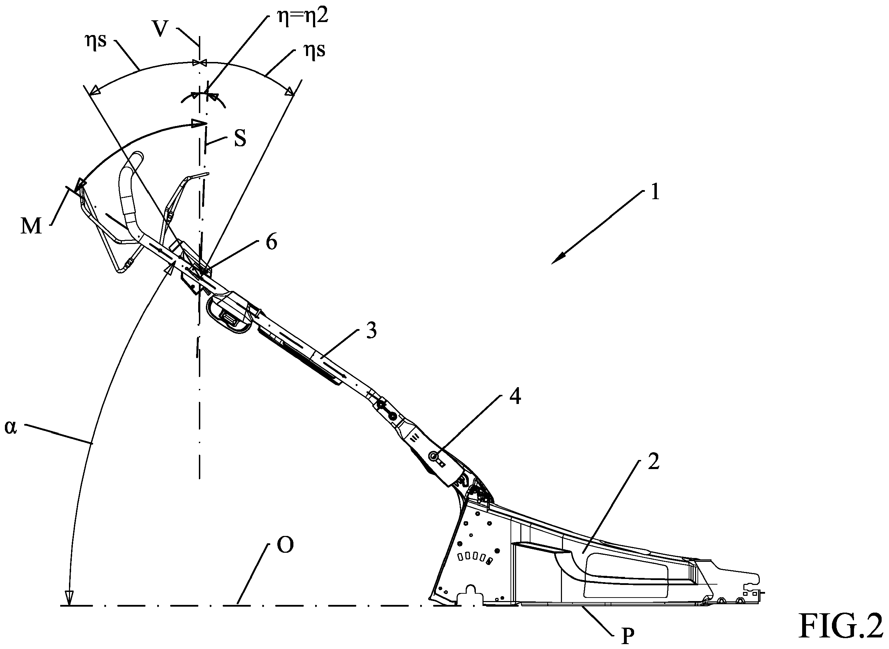

Figure 2 shows the lawnmower 1 with the handle 3 in the high position, in which the absolute value η₂ of the angle η is smaller than the absolute value of the threshold value ηₛ: the starting is allowed.

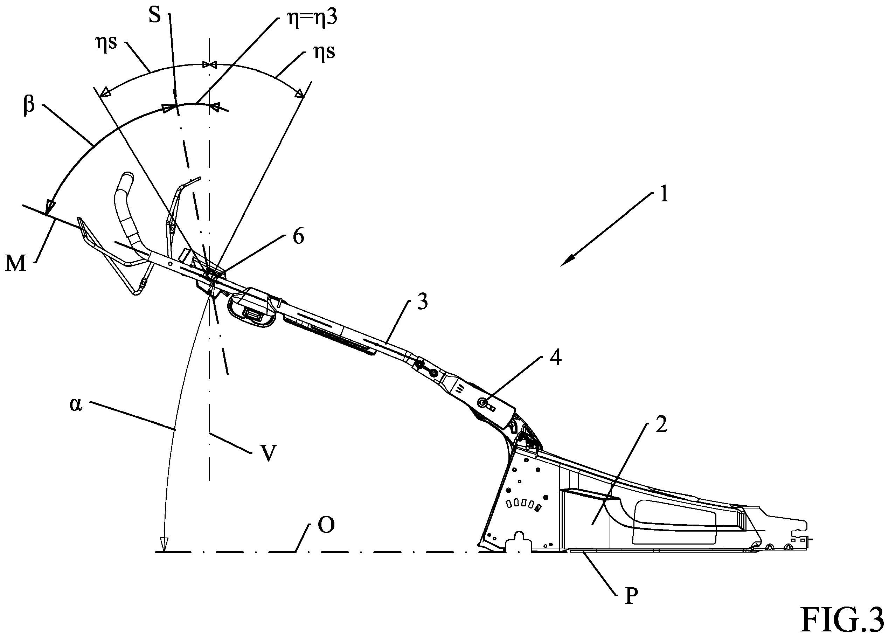

Figure 3 shows the lawnmower 1 with the handle 3 in the low position, in which the absolute value η₃ of the angle η is greater than the absolute value of η₁, but smaller than the absolute value of the threshold value ηₛ: the starting is allowed.

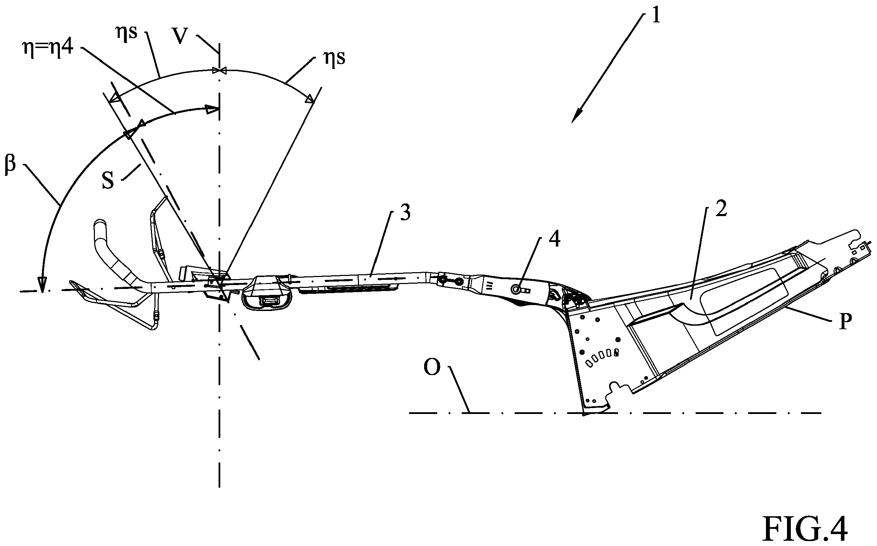

In Figure 4 the frame 2 is lifted, for example, to overtake an unevenness of the ground. The handle 3 is still in the intermediate position of Figure 1, but the absolute value η₄ of the angle η is still smaller than the absolute value of the threshold value ηₛ: the starting is allowed. It should be noted that the starting is allowed although the axis P of the cutting plane is lifted: this occurs because the operation of the tilt sensor 6 is independent of the position of the frame 2 and therefore of the axis P.

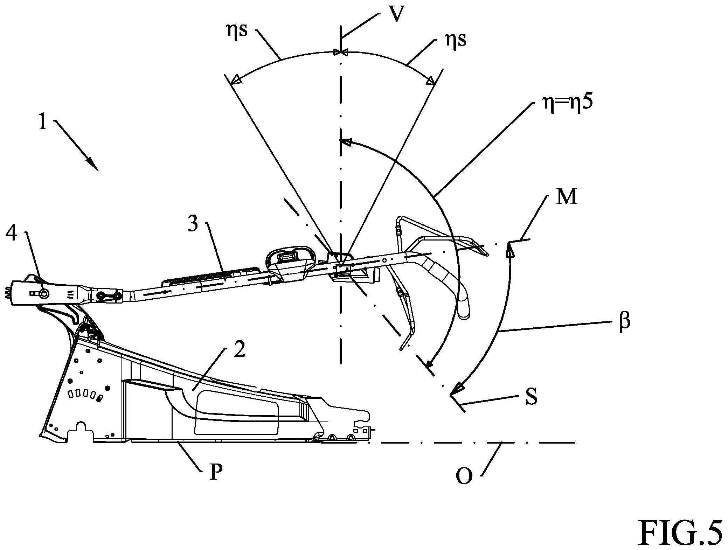

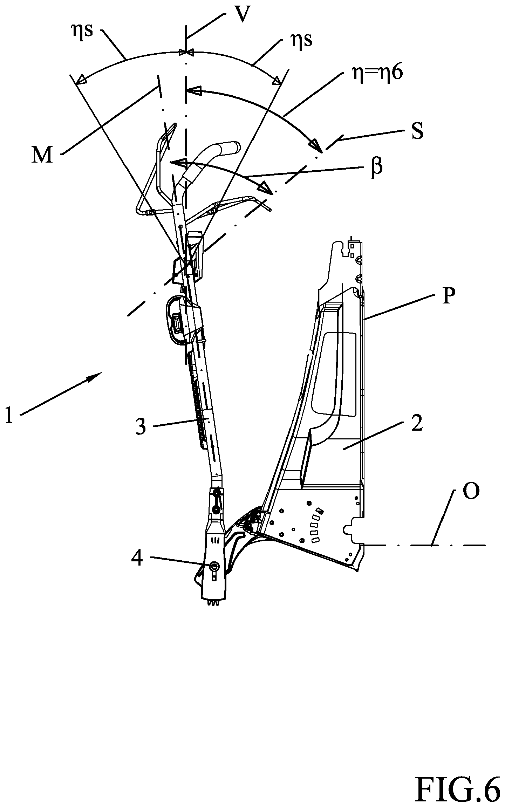

Figures 5, 6 show two parking configurations of the lawnmower 1, in which the starting is not allowed.

In a first parking configuration (horizontal parking) the axis P coincides with the axis O, and the handle 3 is tipped forwards so that the absolute value η₅ of the angle η is greater than the absolute value of the threshold value ηₛ.

Figure 6 shows a second parking configuration (vertical parking) in which the axis P is vertical and the absolute value η₆ of the angle η is greater than the threshold value ηₛ.

The position of the handle 3 is therefore essential, regardless of the position of the frame 2 and of the cutting plane.

Advantageously, it is therefore possible to define a starting inhibition parking position also when the frame 2 is horizontal or slightly inclined (for example, in the presence of an inclined hilly plane): thus, the lawnmower 1 does not risk running over a user if accidentally started.

Consequently, the starting is inhibited as the handle 3 is inclined forwards with respect to the frame 2, i.e., the absolute value of the angle η is greater than the absolute value of the threshold value ηₛ.

For a safe parking of the lawnmower 1, independent of the lying of the frame 2, it is therefore necessary to mount the tilt sensor 6 on the handle 3, preferably in the proximity of the grip 5 and of the drives 7, setting an angle β of reference with respect to the axis M.

Afterwards, the threshold value ηₛ is set to establish the parking condition in which the starting is not allowed.

Said setting allows to inhibit the starting even when the frame 2 is vertical (Figure 6) since the handle 3 remains tipped forwards with respect to the frame 2 by virtue of locking means acting on the pin 4.

Advantageously, the vertical frame 2 parking configuration is detected only by virtue of the position of the handle 3 with respect to the frame 2, without further sensors being mounted inside the frame 2 itself, in the vicinity of mechanical parts subject to wear and overheating.

In the lawnmower 1, the tilt sensor 6 is placed in a box directly electronically connected to the drives 7, without any physical interaction with the engine or the blade.

However, it is possible to inhibit the starting of the lawnmower 1 independently of where the tilt sensor 6 is mounted.

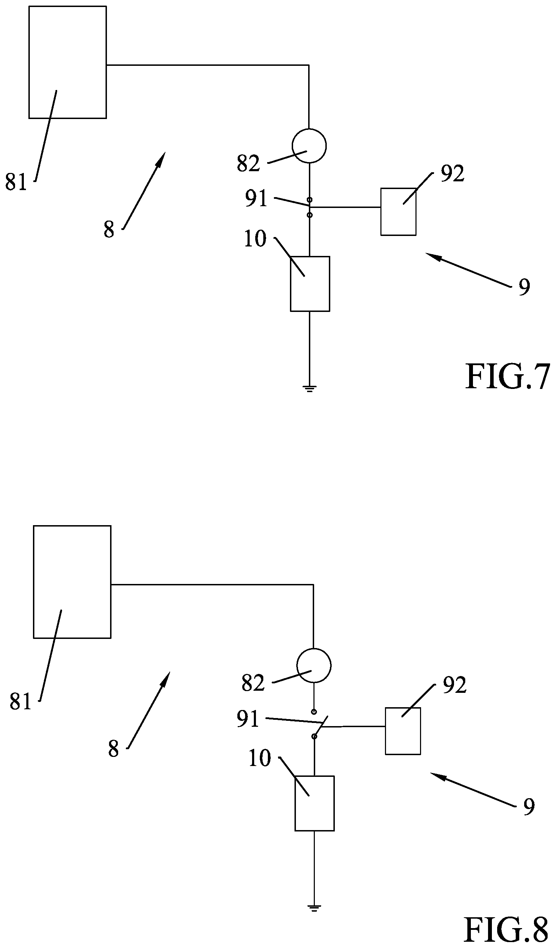

It is known that the lawnmowers 1 are provided with a starting circuit 8 which is separate from a switch-off circuit 9 with a switch 91 (Figure 7).

The starting circuit 8 usually comprises a battery 81 and a starter motor 82.

Downstream of the starting 8 and switch-off circuits 9, an internal combustion engine 10 is shown, comprising spark plugs which are triggered by a coil following the rotation of the drive shaft generated by the starter motor 82.

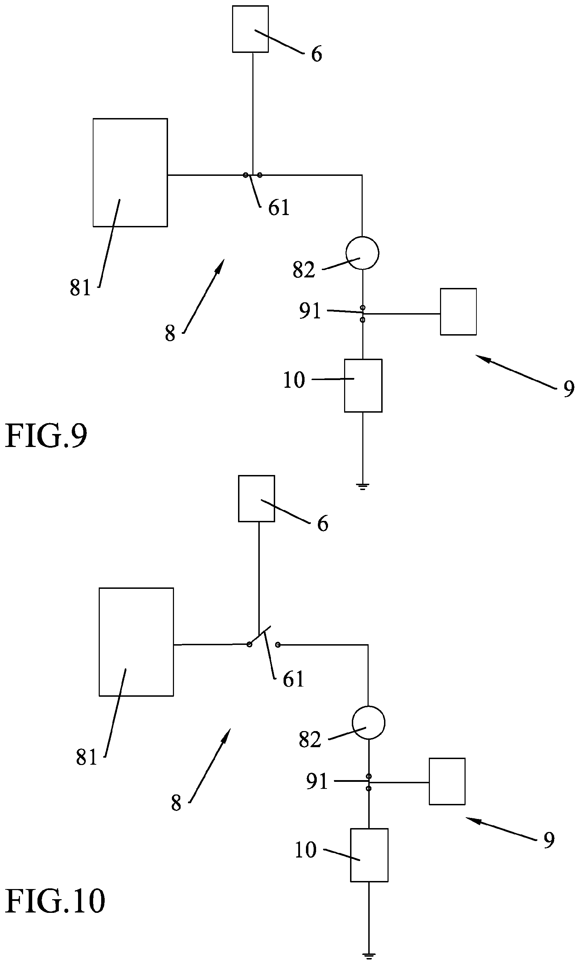

Figure 9 shows a circuit diagram of the lawnmower 1 according to the present invention in which the starting circuit 8 also comprises the tilt sensor 6 described above, with a switch 61, in particular in the electrical connection between the battery 81 and the starter motor 82.

If the absolute value of the angle η of the tilt sensor 6 is smaller than the absolute value of the threshold value ηₛ the starting is allowed (Figure 9): the switch 61 is closed, thus allowing the battery to power the starter motor 82 which starts the engine 10.

If the absolute value of the angle η is greater than or equal to the absolute value of the threshold value ηₛ the starting is not allowed (Figure 10): the switch 61 opens, interrupting the electrical connection between the battery 81 and the starter motor 82. In such a situation, the motor 82 does not receive any electrical impulse and therefore it remains completely inactive.

Figures 7 and 8 show the starting 8 and switch-off 9 circuit diagram of a known lawnmower, for example, with a tilt sensor 92 on the switch-off circuit 8, without a tilt sensor 6 on the starting circuit 8.

If the known lawnmower is in a parking configuration, inclined beyond the threshold value of the tilt sensor 92, the switch 91 will be open, preventing the electrical contact of the starter motor 82 with the engine 10. However, the motor 82 will start, putting in motion dangerous components, for example, the cutting blade, independently of the starting of the engine 10.

Alternatively, it is possible for the tilt sensor 6 to be electrically connected between the battery 81 and the ground, not between the battery 81 and the starter motor 82. In such a case, if the value of the angle η is greater than or equal to the absolute value of the threshold value ηₛ (starting not allowed), the switch 61 closes and the battery 81 goes to ground. As before, the starter motor 82 does not receive any electrical impulse.

It is therefore essential that a tilt sensor 6 is on the starting circuit 8 to prevent any movement of dangerous parts of the lawnmower.

Consequently, to achieve the object of the invention, it is not necessary that the tilt sensor 6 is mounted on the handle 3 as shown in Figures 1-6, but rather that said tilt sensor 6 is simply associated with the starting circuit 8 separate from the switch-off circuit 9.

However, the mounting of the tilt sensor 6 on the handle 3, has advantages as described above, in particular, the distancing from the engine and from the cutting blade, reducing the wear thereof. Furthermore, the mounting of the tilt sensor 6 in the vicinity of the grip 5 also simplifies the electrical connection to the drives 7.

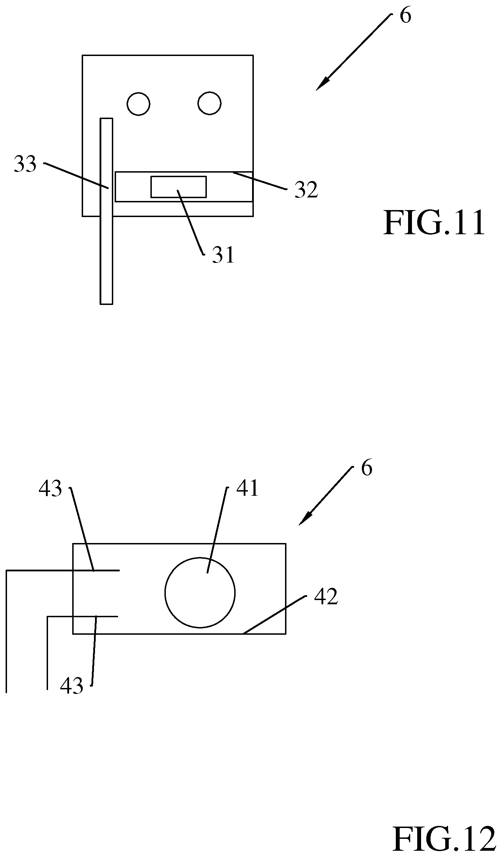

Figure 11 shows a tilt sensor 6 of the magnetic type based on contact technology of the reed type, in which a magnet 31 is able to slide along a rectilinear track 32 between an open circuit position in which the magnet 31 is in a first position away from laminas 33, and a closed circuit position in which the magnet 31 is in a second position near the laminas 33 so that these may perceive the magnetic field thereof.

The tilt sensor 6 is mounted on the lawnmower 1, not necessarily on the handle 3, so that the inclination of the sliding axis of the magnet 31 varies in accordance with the variable angle η.

If the absolute value of said angle η is greater than the absolute value of the threshold value ηₛ, the magnet 32 remains in the first position, inhibiting the starting of the lawnmower 1 since the circuit remains open.

If the absolute value of said angle η is smaller than the absolute value of the threshold value ηₛ, the magnet 32 moves towards said second position until closing the circuit, allowing the starting of the lawnmower 1.

Figure 12 shows instead a tilt sensor 6 of the mechanical type in which a ball 41 is able to slide along a rectilinear track 42 between an open circuit position in which the ball 41 is in a first position away from contacts 43, and a closed circuit position in which the ball 41 is in a second position near the contacts 43.

As for the tilt sensor 6 of the magnetic type, the tilt sensor 6 of the mechanical type is mounted on the lawnmower 1, not necessarily on the handle 3, so that the variable inclination of the sliding axis of the ball 41 is in accordance with the variable angle η.

If the absolute value of said angle η is greater than the absolute value of the threshold value ηₛ, the ball 41 remains in the first position, thus inhibiting the starting of the lawnmower 1 since the circuit remains open.

If the absolute value of said angle η is smaller than the absolute value of the threshold value ηₛ, the ball 41 moves towards said second position until closing the circuit, thus allowing the starting of the lawnmower 1.

The technical effect sought (inhibition when starting) is therefore obtained by a tilt sensor 6 generally provided with a slider (for example, the magnet 31 or the ball 41) movable along a sliding axis (i.e., the sensor axis S) on the basis of the inclination of the lawnmower 1, i.e., the exceeding or not of the threshold value ηₛ.

It should be noted that the technical solution claimed is valid both for the lawnmower 1 equipped with the internal combustion engine 10, in which the battery 81 is only used during the starting step and for auxiliary functions with the engine 10 switched off (for example, the power supply of a control panel), and for lawnmowers 1 which are exclusively electric, in which the motor 82 is the main engine used for all functions, including the starting.

The term starting, referred to the motor 82 or to the circuit 8, is therefore to be intended in a wide manner, i.e., able to start the lawnmower 1, possibly also starting the internal combustion engine 10. The motor 82 is, in any case, a motor of the electrical type.

## Claims

1. A lawnmower (1) comprising a starting circuit (8) having a battery (81) and a starter motor (82), and a switch-off circuit (9) and being further provided with a tilt sensor (6) electrically connected to the starting circuit (8),
said tilt sensor (6) being mounted on the lawnmower (1) so as to define a variable angle (η) with respect to a vertical axis (V), **characterized in that** said tilt sensor (6) is configured to inhibit inhibiting the starting of the lawnmower (1) in case the absolute value of said variable angle (η) is greater than the absolute value of a threshold value (ηₛ).

2. A lawnmower (1) according to claim 1, **characterized in that** said tilt sensor (6) is electrically connected between the battery (81) and the starter motor (82) by a switch (61), if the absolute value of the variable angle (η) of the tilt sensor (6) is smaller than the absolute value of the threshold value (ηₛ), the switch (61) being closed thus allowing the battery to power the starter motor (82) which starts an engine (10) which is downstream of said starting circuit (8) and of said switch-off circuit (9).

3. A lawnmower (1) according to claim 1, **characterized in that** said tilt sensor (6) is electrically connected between the battery (81) and a ground by a switch (61), if the value of the angle (η) is greater than or equal to the absolute value of the threshold value (ηₛ), the switch (61) being closed with the battery (81) to ground.

4. A lawnmower (1) according to any one of the preceding claims, **characterized in that** it comprises a frame (2), a handle (3) rotatably associated with said frame (2) at a pin (4), and a tilt sensor (6), said tilt sensor (6) being mounted on said handle (3) so that a sensor axis (S) of the tilt sensor (6) forms a constant angle (α) with a handle axis (M) of the handle (3).

5. A lawnmower (1) according to any one of the preceding claims, **characterized in that** the tilt sensor (6) allows the starting of the lawnmower (1) if said variable angle (η) is comprised between two threshold values (ηₛ) which are symmetrical with respect to said vertical axis (V), preferably between -30° and +30°.

6. A lawnmower (1) according to any one of the preceding claims, **characterized in that** said tilt sensor (6) comprises a slider (31, 41) able to slide along a rectilinear track (32, 42) between
an open circuit position wherein the starting of the lawnmower (1) is inhibited since the absolute value of said variable angle (η) of the sliding axis of the slider (31, 41) is greater than the absolute value of the threshold value (ηₛ), and
a closed circuit position wherein the starting of the lawnmower (1) is allowed since the absolute value of said variable angle (η) of the sliding axis of the slider (31, 41) is smaller than the absolute value of the threshold value (ηₛ).

## Patentansprüche

1. Rasenmäher (1) mit einem Starterschaltkreis (8), der eine Batterie (81) und einen Startermotor (82) aufweist, und mit einem Abschaltkreis (9) sowie weiterhin mit einem Neigungssensor (6), der mit dem Starterschaltkreis (8) elektrisch verbunden ist,
wobei der Neigungssensor (6) an dem Rasenmäher (1) derart angebracht ist, dass ein variabler Winkel (η) in Bezug auf eine vertikale Achse (V) gebildet ist, **dadurch gekennzeichnet, dass** der Neigungssensor (6) derart ausgebildet ist, dass das Starten des Rasenmähers (1) in dem Fall unterbunden ist, in dem der Absolutwert des variablen Winkels (η) größer ist als der Absolutwert eines Schwellenwerts (ηₛ).

2. Rasenmäher (1) nach Anspruch 1,
**dadurch gekennzeichnet, dass** der Neigungssensor (6) durch einen Schalter (61) elektrisch zwischen die Batterie (81) und den Startermotor (82) geschaltet ist, wobei dann, wenn der Absolutwert des variablen Winkels (η) des Neigungssensors (6) geringer ist als der Absolutwert des Schwellenwerts (ηₛ), der Schalter (61) geschlossen wird, wodurch die Batterie den Startermotor (82), der einen dem Starterschaltkreis (8) und dem Abschaltschaltkreis (9) nachgeschalteten Motor (10) startet, mit Strom versorgen kann.

3. Rasenmäher (1) nach Anspruch 1,
**dadurch gekennzeichnet, dass** der Neigungssensor (6) durch einen Schalter (61) elektrisch zwischen die Batterie (81) und Masse geschaltet ist, wobei dann, wenn der Wert des Winkels (η) größer als oder gleich dem Absolutwert des Schwellenwertes (ηₛ) ist, der Schalter (61) geschlossen wird und dabei die Batterie (81) an Masse gelegt wird.

4. Rasenmäher (1) nach einem der vorhergehenden Ansprüche,
**dadurch gekennzeichnet, dass** er einen Rahmen (2), einen Griff (3), der an einem Stift (4) drehbar mit dem Rahmen (2) verbunden ist, und einen Neigungssensor (6) aufweist, wobei der Neigungssensor (6) derart an dem Griff (3) angebracht ist, dass eine Sensorachse (S) des Neigungssensors (6) einen konstanten Winkel (α) mit einer Griffachse (M) des Griffs (3) bildet.

5. Rasenmäher (1) nach einem der vorhergehenden Ansprüche,
**dadurch gekennzeichnet, dass** der Neigungssensor (6) das Starten des Rasenmähers (1) zulässt, wenn der variable Winkel (η) zwischen zwei Schwellenwerten (ηₛ) liegt, die symmetrisch in Bezug auf die vertikale Achse (V) sind und vorzugsweise zwischen -30° und +30° liegen.

6. Rasenmäher (1) nach einem der vorhergehenden Ansprüche,
**dadurch gekennzeichnet, dass** der Neigungssensor (6) einen Schieber (31, 41) aufweist, der entlang einer geradlinigen Bahn (32, 42) verschiebbar ist zwischen
einer offenen Schaltkreisposition, in der das Starten des Rasenmähers (1) unterbunden ist, da der Absolutwert des variablen Winkels (η) der Gleitachse des Schiebers (31, 41) größer ist als der Absolutwert des Schwellenwerts (ηₛ), und einer geschlossenen Schaltkreisposition, in der das Starten des Rasenmähers (1) ermöglicht ist, da der Absolutwert des variablen Winkels (η) der Gleitachse des Schiebers (31, 41) kleiner ist als der Absolutwert des Schwellenwerts (ηₛ).

## Revendications

1. Tondeuse à gazon (1) comprenant un circuit de démarrage (8) ayant une batterie (81) et un démarreur (82), un circuit de mise hors circuit (9) et étant en outre prévue avec un capteur d'inclinaison (6) raccordé électriquement au circuit de démarrage (8),
ledit capteur d'inclinaison (6) étant monté sur la tondeuse à gazon (1) afin de définir un angle variable (η) par rapport à un axe vertical (V),
**caractérisée en ce que** ledit capteur d'inclinaison (6) est configuré pour empêcher le démarrage de la tondeuse à gazon (1) dans le cas dans lequel la valeur absolue dudit angle variable (η) est supérieure à la valeur absolue d'une valeur de seuil (ηₛ).

2. Tondeuse à gazon (1) selon la revendication 1, **caractérisée en ce que** ledit capteur d'inclinaison (6) est électriquement raccordé entre la batterie (81) et le démarreur (82) par un commutateur (61), si la valeur absolue de l'angle variable (η) du capteur d'inclinaison (6) est inférieure à la valeur absolue de la valeur de seuil (ηₛ), le commutateur (61) étant fermé, permettant ainsi à la batterie d'alimenter le démarreur (82) qui démarre un moteur (10) qui est en aval dudit circuit de démarrage (8) et dudit circuit de mise hors circuit (9).

3. Tondeuse à gazon (1) selon la revendication 1, **caractérisée en ce que** ledit capteur d'inclinaison (6) est électriquement raccordé entre la batterie (81) et une masse par un commutateur (61), si la valeur de l'angle (η) est supérieure ou égale à la valeur absolue de la valeur de seuil (ηₛ), le commutateur (61) est fermé avec la batterie (81) par rapport à la masse.

4. Tondeuse à gazon (1) selon l'une quelconque des revendications précédentes, **caractérisée en ce qu'**elle comprend un bâti (2), une poignée (3) associée en rotation avec ledit bâti (2) au niveau d'une broche (4), et un capteur d'inclinaison (6), ledit capteur d'inclinaison (6) étant monté sur ladite poignée (3) de sorte qu'un axe de capteur (S) du capteur d'inclinaison (6) forme un angle constant (α) avec un axe de poignée (M) de la poignée (3).

5. Tondeuse à gazon (1) selon l'une quelconque des revendications précédentes, **caractérisée en ce que** le capteur d'inclinaison (6) permet le démarrage de la tondeuse à gazon (1) si ledit angle variable (η) est compris entre deux valeurs de seuil (ηₛ) qui sont symétriques par rapport audit axe vertical (V), de préférence compris entre -30° et +30°.

6. Tondeuse à gazon (1) selon l'une quelconque des revendications précédentes, **caractérisée en ce que** ledit capteur d'inclinaison (6) comprend une glissière (31, 41) pouvant coulisser le long d'une voie rectiligne (32, 42) entre :
une position de circuit ouverte dans laquelle le démarrage de la tondeuse à gazon (1) est empêché étant donné que la valeur absolue dudit angle variable (η) de l'axe de coulissement de la glissière (31, 41) est supérieure à la valeur absolue de la valeur de seuil (ηₛ), et
une position de circuit fermée dans laquelle le démarrage de la tondeuse à gazon (1) est autorisé étant donné que la valeur absolue dudit angle variable (η) de l'axe de coulissement de la glissière (31, 41) est inférieure à la valeur absolue de la valeur de seuil (ηₛ).
